# EUROPEAN PATENT APPLICATION

(11) **EP 3 907 472 A1**
(43) Date of publication of application: **10.11.2021**
(21) Application number: 20172904.3
(22) Date of filing: 05.05.2020
(51) Int. Cl.: G01C 21/36, G01S 7/48, G01S 17/931, G06K 9/00, G06N 3/04, G06N 3/08, G06T 5/50

(54) **DETECTING LANE MARKINGS BASED ON LIDAR DATA**

(71) Applicant: Bayerische Motoren Werke Aktiengesellschaft, 80809 München (DE)
(72) Inventor: Martinek, Philipp, 85238 Petershausen (DE); Pucea, Gheorghe, 80995 München (DE); Rao, Qing, 80335 München (DE); Sivalingam, Udhayaraj, 85716 Unterschleissheim (DE)

(57) **Abstract**

One aspect of the invention relates to a computer-implemented method for detecting lane markings, with the method comprising the steps of: Receiving a first point cloud gathered by a lidar sensor comprised by a vehicle on a first points in time, Projecting the first point cloud into a two-dimensional bird's eye view grid, wherein each lidar point of the first point cloud is assigned to a cell in the grid, and Determining for at least one cell whether the cell comprises a lane marking depending on the lidar points projected to the respective cell, using a neural network, in particular a fully convolutional neural network.

## Description

This invention relates to a computer-implemented method and a data processing system for detecting lane markings based on lidar data.

Lidar, called LIDAR, LiDAR, and LADAR, is a surveying method that measures distance to a target by illuminating the target with laser light and measuring the reflected light with a sensor. Differences in laser return times and wavelengths can then be used to make digital 3-D representations of the target. The name lidar, now used as an acronym of light detection and ranging, was originally a portmanteau of light and radar.

Lidar may be used by an automated vehicle to sense the environment of the automated vehicle.

An automated vehicle is a vehicle with automated longitudinal guidance and/or automated lateral guidance. The term "automated vehicle" also comprises an autonomous vehicle. The term "automated vehicle" comprises in particular a vehicle with an arbitrary level of automation, for example the levels of automation that are defined in the standard SAE J3016 (SAE - Society of Automotive Engineering):
Level 0: Automated system issues warnings and may momentarily intervene but has no sustained vehicle control.

Level 1 ("hands on"): The driver and the automated system share control of the vehicle. Examples are Adaptive Cruise Control (ACC), where the driver controls steering and the automated system controls speed; and Parking Assistance, where steering is automated while speed is under manual control. The driver must be ready to retake full control at any time. Lane Keeping Assistance (LKA) Type II is a further example of level 1 self-driving.

Level 2 ("hands off"): The automated system takes full control of the vehicle (accelerating, braking, and steering). The driver must monitor the driving and be prepared to intervene immediately at any time if the automated system fails to respond properly. The shorthand "hands off" is not meant to be taken literally. In fact, contact between hand and wheel is often mandatory during SAE 2 driving, to confirm that the driver is ready to intervene.

Level 3 ("eyes off"): The driver can safely turn their attention away from the driving tasks, e.g. the driver can text or watch a movie. The vehicle will handle situations that call for an immediate response, like emergency braking. The driver must still be prepared to intervene within some limited time, specified by the manufacturer, when called upon by the vehicle to do so.

Level 4 ("mind off"): As level 3, but no driver attention is ever required for safety, i.e. the driver may safely go to sleep or leave the driver's seat. Self-driving is supported only in limited spatial areas (geofenced) or under special circumstances, like traffic jams. Outside of these areas or circumstances, the vehicle must be able to safely abort the trip, i.e. park the car, if the driver does not retake control.

Level 5 ("steering wheel optional"): No human intervention is required at all. An example would be a robotic taxi.

The purpose of the invention is to generate groundtruth data in a large volume for testing and validating in-vehicle lane detection functions.

One aspect of the invention relates to a computer-implemented method for detecting lane markings.

The lane marking is in particular
- a lane boundary of a lane on which the vehicle is driving on, in particular a left or a right lane boundary,
- a lane boundary of a lane on which the vehicle is not driving on, in particular a left or a right lane boundary, or
- a road boundary, in particular a flat or elevated road boundary, in particularly a left and right respective road boundary.

Parts of the environment, which are no lane markings, are labelled as background in this application.

One step of the inventions is Receiving a first point cloud gathered by a lidar sensor comprised by a vehicle on a first points in time.

Lidar is a surveying method that measures distance to a target by illuminating the target with laser light and measuring the reflected light with a sensor. Differences in laser return times and wavelengths can then be used to make digital 3-D representations of the target.

A point cloud is a set of data points in space. Point clouds are generally produced by 3D scanners, for example by the lidar sensor, which measure many points on the external surfaces of objects around them.

The vehicle is in particular a car and/or an automated vehicle.

Another step of the invention is Projecting the first point cloud into a two-dimensional bird's eye view grid, wherein each lidar point of the first point cloud is assigned to a cell in the grid.

Another step of the invention is Determining for at least one cell whether the cell comprises a lane marking depending on the lidar points projected to the respective cell, using a neural network, in particular a fully convolutional neural network.

Artificial neural networks are computing systems vaguely inspired by the biological neural networks that constitute animal brains. Such systems "learn" to perform tasks by considering examples, generally without being programmed with any task-specific rules. For example, in image recognition, they might learn to identify images that contain cats by analyzing example images that have been manually labeled as "cat" or "no cat" and using the results to identify cats in other images. They do this without any prior knowledge about cats, e.g., that they have fur, tails, whiskers and cat-like faces. Instead, they automatically generate identifying characteristics from the learning material that they process.

An artificial neural network is based on a collection of connected units or nodes called artificial neurons which loosely model the neurons in a biological brain. Each connection, like the synapses in a biological brain, can transmit a signal from one artificial neuron to another. An artificial neuron that receives a signal can process it and then signal additional artificial neurons connected to it.

In common artificial neural network implementations, the signal at a connection between artificial neurons is a real number, and the output of each artificial neuron is computed by some non-linear function of the sum of its inputs. The connections between artificial neurons are called "synapses". Artificial neurons and synapses typically have a weight that adjusts as learning proceeds. The weight increases or decreases the strength of the signal at a connection. Artificial neurons may have a threshold such that the signal is only sent if the aggregate signal crosses that threshold. Typically, artificial neurons are aggregated into layers. Different layers may perform different kinds of transformations on their inputs. Signals travel from the first layer (the input layer), to the last layer (the output layer), possibly after traversing the layers multiple times.

The original goal of the artificial neural network approach was to solve problems in the same way that a human brain would. However, over time, attention moved to performing specific tasks, leading to deviations from biology. Artificial neural networks have been used on a variety of tasks, including computer vision, speech recognition, machine translation, social network filtering, playing board and video games and medical diagnosis.

A convolutional neural network consists of an input and an output layer, as well as multiple hidden layers. The hidden layers of a CNN typically consist of a series of convolutional layers that convolve with a multiplication or other dot product.

Though the layers are colloquially referred to as convolutions, this is only by convention. Mathematically, it is technically a sliding dot product or cross-correlation. This has significance for the indices in the matrix, in that it affects how weight is determined at a specific index point.

The present neural network is in particular trained in a supervised way to determining for the at least one cell whether the cell comprises a lane marking.

In a preferred embodiment of the invention the method comprises the additional steps of Receiving a second point cloud gathered by the lidar sensor on at second point in time, and of Projecting the second point cloud in the grid, wherein each lidar point of the second point cloud is assigned to a cell in the grid.

This aggregation of lidar measurements from different points in time leverages the gains of using past and future data. This is especially powerful when working with lidar data, as a common issue caused by the sparsity of lidar point clouds can be resolved.

A movement of the vehicle between the first point in time and the second point in time is in particular compensated, for example by using information from the vehicle's internal odometry or a differential GPS. Both have advantages and disadvantages: While the vehicle's internal measurement unit is more precise in close range, it starts to drift once one accumulates over a larger range. For differential GPS, it is vice versa.

In another preferred embodiment of the invention, the method comprises the additional steps of Determining at least one feature of the lidar points projected to one cell, and Determining for at least one cell whether the cell comprises a lane marking depending on the at least one feature, using the neural network.

A feature of the lidar points projected to one cell is in particular a value that is calculated on the characteristics of respective lidar points, for example on the 3-D representations of the target.

The at least on feature comprises in particular
- a maximum intensity of the light beam returning to the lidar in the respective cell,
- a median intensity of the light beam returning to the lidar in the respective cell,
- a minimum elevation of lidar points in the respective cell,
- a maximum elevation of lidar points in the respective cell,
- a mean elevation of lidar points in the respective cell, and/or
- a number of lidar points in the respective cell.

The intensity of the light beam is in particular
- a radiant intensity, a radiometric quantity measured in watts per steradian (W/sr),
- a luminous intensity, a photometric quantity measured in lumens per steradian (Im/sr), or candela (cd),
- irradiance, a radiometric quantity, measured in watts per meter squared (W/m2), or
- radiance, commonly called "intensity" in astronomy and astrophysics (W·sr-1·m-2).

The elevation of lidar points is in particular an elevation over ground-level.

In another preferred embodiment of the invention, the method comprises the additional step of Determining a polyline, which is distinctive for a lane marking, by fitting cells of the grid which are determined to comprise lane markings.

A polyline is in particular a line defined by several points that are connected.

The step of determining a polyline is in particular performed by applying a clustering algorithm on cells of the grid or by application of a polynomial regression function.

This step uses in particular a clustering algorithm, for example K-means clustering, on each segmented class of points, which returns a predefined number of equidistant separated cluster centers. These cluster centers represent a polyline for that particular cluster.

Alternatively, the polyline is learned via a polynomial regression function. The coordinate along the traveling direction is defined to be the value to predict, and the remaining coordinates are used as features. Once the model is fitted with the segmented points for a specific class, polylines are generated using the fitted model for that specific class.

In another preferred embodiment of the invention, the method comprises the additional steps of: Receiving lane markings determined by processing at least one image gathered by a camera of the vehicle, Comparing the lane markings determined by a method according to any of the claims of this application and the lane markings determined by processing the at least one image gathered by the camera of the vehicle, and Determining depending on the comparison whether the lane markings determined by the method according to any of the claims of this application and the lane markings determined by processing the at least one image gathered by the camera of the vehicle are essentially the same.

This preferred embodiment takes into account that the method uses only lidar data as input and therefore its output can serve as reference data for camera-based lane marking detection and/or to achieve a higher reliability for lane marking detection overall.

For example, if the lane markings determined by the method according to any of the claims of this application and the lane markings determined by processing the at least one image gathered by the camera of the vehicle are essentially not the same, it can be concluded that at least one of these two channels is producing defective results and therefore lane marking cannot be trusted.

In another preferred embodiment of the invention the fully convolutional neural network has been trained in a supervised way to determine for at least one cell whether the cell comprises a lane marking.

In another preferred embodiment of the invention the method is used to generate reference data for testing and/or validating in-vehicle lane detection functions.

Another aspect of the invention relates to a data processing system, in particular a scalable data processing system, comprising means for carrying out the steps of the method of any of the claims.

For a better understanding of the present invention, and to show how the same may be carried into effect, reference will now be made, by way of example, to the accompanying drawing, in which:
Fig. 1 shows an exemplified flow of the inventive method,
Fig. 2 shows an exemplified bird's eye view grid, and
Fig. 3 shows another exemplified bird's eye view grid with a polyline.

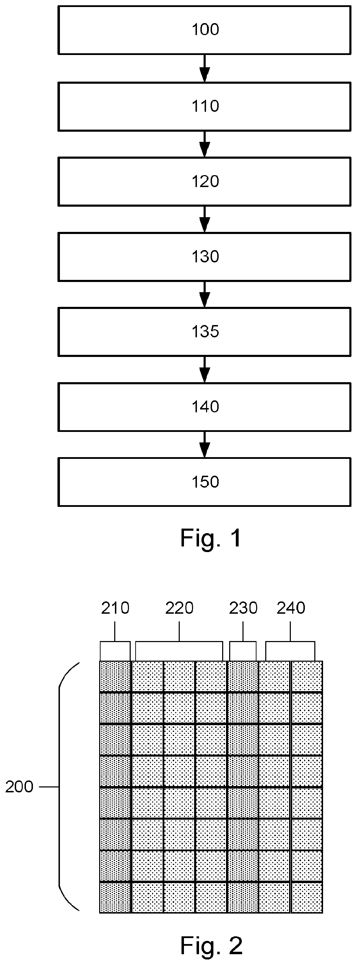

Fig 1 shows an exemplified flow of a computer-implemented method for detecting lane markings.

A step of the method is Receiving 100 a first point cloud gathered by a lidar sensor comprised by a vehicle on a first points in time.

Another step of the method is Receiving 110 a second point cloud gathered by the lidar sensor on at second point in time, wherein the first point in time and the second point in time differ from each other.

Another step of the method is Projecting 120 the first point cloud into a two-dimensional bird's eye view grid 200, 300, wherein each lidar point of the first point cloud is assigned to a cell in the grid 200, 300.

Another step of the method is Projecting 130 the second point cloud in the grid 200, 300, wherein each lidar point of the second point cloud is assigned to a cell in the grid 200, 300.

The first point cloud and the second point cloud are projected to the same grid, however a movement of the vehicle between the first point in time and the second point in time is compensated.

Another step of the method is Determining 135 at least one feature of the lidar points projected to one cell.

The at least on feature comprises for example
- a maximum intensity of the light beam returning to the lidar in the respective cell,
- a median intensity of the light beam returning to the lidar in the respective cell,
- a minimum elevation of lidar points in the respective cell,
- a maximum elevation of lidar points in the respective cell,
- a mean elevation of lidar points in the respective cell, and/or
- a number of lidar points in the respective cell

Another step of the method is Determining 140 for at least one cell whether the cell comprises a lane marking depending on the lidar points projected to the respective cell, in particular depending on the at least one feature of the lidar points, using a neural network, in particular a fully convolutional neural network.

For this step, the neural network has been trained in a supervised way to determine for at least one cell whether the cell comprises a lane marking, depending on the lidar points, in particular depending on the at least on feature of the lidar points.

Another step of the method is Determining 150 a polyline 310, which is distinctive for a lane marking by fitting cells of the grid 200, 300 which are determined to comprise lane markings.

Fig. 2 shows an exemplified two-dimensional bird's eye view grid 200, which comprises cells, which are organized in rows and columns.

The density of the dots in the cells of the grid 200 represents a feature of the lidar points projected to the respective cell, therefore for example a maximum intensity of the light beam returning to the lidar in the respective cell, a median intensity of the light beam returning to the lidar in the respective cell, a minimum elevation of lidar points in the respective cell, a maximum elevation of lidar points in the respective cell, a mean elevation of lidar points in the respective cell, or a number of lidar points in the respective cell.

The neural network, in particular the fully convolutional neural network is trained to determine 140 for these cells whether these cells comprise a lane marking depending on the feature. In this example, the cells in columns 210 and 230 comprise a lane marking and the cells in columns 220 and 240 do not comprise a lane marking.

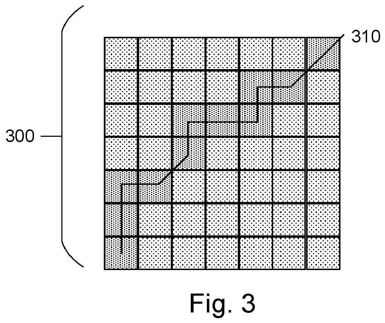

Fig. 3 shows another exemplified bird's eye view grid with a polyline.

The density of the dots in the cells of the grid 300 represents a feature of the lidar points projected to the respective cell.

Similar to Fig. 2, the cells with a high density comprise a lane marking and are therefore connected by a polyline 310.

## Claims

1. A computer-implemented method for detecting lane markings, with the method comprising the steps of:
• Receiving (100) a first point cloud gathered by a lidar sensor comprised by a vehicle on a first points in time,
• Projecting (120) the first point cloud into a two-dimensional bird's eye view grid (200, 300), wherein each lidar point of the first point cloud is assigned to a cell in the grid (200, 300), and
• Determining (140) for at least one cell whether the cell comprises a lane marking depending on the lidar points projected to the respective cell, using a neural network, in particular a fully convolutional neural network.

2. A method according to claim 1, comprising the additional steps of
• Receiving (110) a second point cloud gathered by the lidar sensor on at second point in time, and
• Projecting (130) the second point cloud in the grid (200, 300), wherein each lidar point of the second point cloud is assigned to a cell in the grid (200, 300).

3. A method according to claim 2, wherein a movement of the vehicle between the first point in time and the second point in time is compensated.

4. A method according to any of the previous claims, comprising the additional steps of
• Determining (135) at least one feature of the lidar points projected to one cell, and
• Determining (140) for at least one cell whether the cell comprises a lane marking depending on the at least one feature, using the neural network.

5. A method according to claim 4, wherein the at least on feature comprises
• a maximum intensity of the light beam returning to the lidar in the respective cell,
• a median intensity of the light beam returning to the lidar in the respective cell,
• a minimum elevation of lidar points in the respective cell,
• a maximum elevation of lidar points in the respective cell,
• a mean elevation of lidar points in the respective cell, and/or
• a number of lidar points in the respective cell.

6. A method according to any of the previous claims, comprising the additional step of
• Determining (150) a polyline (310), which is distinctive for a lane marking by fitting cells of the grid (200, 300) which are determined to comprise lane markings.

7. A method according to claim 6, wherein the step of Determining (150) a polyline (310) is performed by applying a clustering algorithm on cells of the grid (200, 300).

8. A method according to claim 6, wherein the step of Determining (150) a polyline (310) is performed by application of a polynomial regression function.

9. A method according to any of the previous claims, wherein the lane marking is
• a lane boundary of a lane on which the vehicle is driving on, in particular a left or a right lane boundary,
• a lane boundary of a lane on which the vehicle is not driving on, in particular a left or a right lane boundary,
• a road boundary, in particular a flat or elevated road boundary, in particularly a left and right respective road boundary, or
• a background.

10. A method according to any of the previous claims, comprising the additional steps of:
• Receiving lane markings determined by processing at least one image gathered by a camera of the vehicle,
• Comparing the lane markings determined by a method according to any of the previous claims and the lane markings determined by processing the at least one image gathered by the camera of the vehicle, and
• Determining depending on the comparison whether the lane markings determined by the method according to any of the previous claims and the lane markings determined by processing the at least one image gathered by the camera of the vehicle are essentially the same.

11. A method according to any of the previous claims, wherein the fully convolutional neural network has been trained in a supervised way to determine for at least one cell whether the cell comprises a lane marking.

12. A method according to any of the previous claims, wherein the method is used to generate reference data for testing and/or validating in-vehicle lane detection functions.

13. A data processing system comprising means for carrying out the steps of the method of any of the previous claims.
